# EUROPÄISCHE PATENTSCHRIFT

(11) **EP 2 505 425 B1**
(45) Veröffentlichungstag und Bekanntmachung des Hinweises auf die Patenterteilung: **03.06.2015**
(21) Anmeldenummer: 12159389.1
(22) Anmeldetag: 14.03.2012
(51) Int. Cl.: B60N 2/22, B60N 2/44, B60N 2/48, B60N 2/68

(54) **Polsterüberschneidung**
Upholstery overlap
Chevauchement de rembourrage

(30) Priorität: 28.03.2011 DE 102011015348
(43) Veröffentlichungstag der Anmeldung: 03.10.2012
(73) Patentinhaber: GRAMMER AG, 92224 Amberg (DE)
(72) Erfinder: Übelacker, Roland, 92536 Pfreimd (DE); Deml, Johann, 92554 Thanstein (DE); Schustjew, Sergej, 92237 Sulzbach-Rosenberg (DE)
(74) Vertreter: Hannke, Christian

(56) Entgegenhaltungen:
- US-A- 2 756 808
- US-A1- 2006 255 635
- US-A1- 2008 290 714
- US-A1- 2008 315 657

## Beschreibung

Die Erfindung betrifft einen Fahrzeugsitz mit einem Gestell zum Befestigen des Fahrzeugsitzes an einer Fahrzeugkarosserie, mit einem Sitzteil, mit einer Rückenlehne und mit einer Kopfstütze umfassend eine Kopfstützenaufhängung, bei welchem das Sitzteil und die Rückenlehne an dem Gestell angeordnet sind.

Derartige Fahrzeugsitze sind aus dem Stand der Technik gut bekannt. Neben einer verstellbaren Rückenlehne verfügen die meisten Fahrzeugsitze auch über verstellbare Sitzteile und Kopfstützen, so dass die Fahrzeugsitze in der Summe individuell sehr gut an unterschiedliche Fahrgäste angepasst werden können. Oftmals gestaltet sich die Anpassung aufgrund der Vielzahl an Einstellparameter jedoch aufwändig, insbesondere dann, wenn diesbezügliche Einstellungen händisch vorgenommen werden müssen.

Aus der US 2006/255 635 A1 ist ein Fahrzeugsitz mit Kopfstütze bekannt, bei welchem die Rückenlehne aus einer Vielzahl von Einzelelementen besteht.

Es ist somit Aufgabe der Erfindung einen gattungsgemäßen Fahrzeugsitz dahingehend weiterzuentwickeln, dass dieser trotz eines geringeren Einstellaufwands ebenso gut an die individuellen Bedürfnisse eines Fahrgasts angepasst werden kann.

Die Aufgabe der Erfindung wird von einem Fahrzeugsitz mit den Merkmalen des Anspruchs 1 gelöst.

Dadurch, dass die Kopfstützenaufhängung einerseits von dem Gestell des Fahrzeugsitzes ausgestaltet oder an diesem Gestell befestigt ist, und andererseits einen gestellseitigen Aufhängungsteil und einen rückenlehnenseitigen Aufhängungsteil aufweist, wobei der rückenlehnenseitige Aufhängungsteil außerhalb der Rückenlehne angeordnet ist, ist die Kopfstütze vorteilhafter Weise unabhängig von der Rückenlehne aber dennoch unmittelbar an dem Fahrzeugsitz gehalten bzw. befestigt.

Der Begriff "Gestell" beschreibt im Sinne der Erfindung eine Struktur des Fahrzeugsitzes, über welche im Wesentlichen alle an dem Fahrzeugsitz auftretenden Kräfte in die Fahrzeugkarosserie eingeleitet werden können.

Idealerweise ist die Struktur des Gestells starr, so dass es insgesamt sehr verwindungssteif ist.

Hierzu ist das Gestell beispielsweise fest mit einem Fahrzeugkabinenboden verschraubt.

Das Gestell dient vorzugsweise als Basis zum Aufnehmen der übrigen Komponenten des Fahrzeugsitzes, wie speziell des Sitzteils, der Rückenlehne und der Kopfstütze. Dementsprechend handelt es sich bei dem Gestell um eine Art starres Tragegestell für Fahrzeugsitzkomponenten.

Durch das Gestell erfährt der Fahrzeugsitz einen außergewöhnlich verwindungssteifen Aufbau.

Bei dem Fahrzeugsitz handelt es sich im Wesentlichen um einen Kraftfahrzeugsitz und hier speziell um einen Nutzfahrzeugsitz.

Nach einer ersten vorteilhaften Gestaltungsmöglichkeit ist die Kopfstützenaufhängung von dem Gestell selbst ausgestaltet. Hierbei kann die Kopfstützenaufhängung konstruktiv einfach mittels einer Verlängerung des Gestells bis oberhalb der Rückenlehne bereit gestellt werden. Vorteilhafter Weise ist eine als Kopfstützenaufhängung konzipierte weitere Komponente des Fahrzeugsitzes nicht erforderlich, wodurch der Herstellungs- und Montageaufwand des Fahrzeugsitzes günstig reduziert werden kann. Bei dieser Möglichkeit kann ein Kopfpolster der Kopfstütze direkt an das Gestell angebracht werden.

Nach einer weiteren nicht minder vorteilhaften Gestaltungsmöglichkeit ist die Kopfstützenaufhängung als separate Komponente des Fahrzeugsitzes vorgesehen und an dem Gestell in geeigneter Weise befestigt. Vorteilhafter Weise kann hierbei die Kopfstütze problemlos von dem Gestell abgenommen und gegebenenfalls durch eine andere ausgetauscht werden.

In beiden der vorgenannten Möglichkeiten kann die Rückenlehne somit ohne Positionsveränderung der Kopfstütze in ihrer Lage verändert werden. Dies ist etwa dann von Vorteil, wenn die Rückenlehne in ihrem Neigungswinkel verstellt werden soll.

Eine Anpassung des Rückenlehnenneigungswinkels kann beispielsweise dann wünschenswert sein, wenn das Sitzteil des Fahrzeugsitzes nach vorne oder nach hinten geschoben wird.

Wird das Sitzteil zum Beispiel nach vorne geschoben, verlagert sich das untere Rückenlehnenende horizontal nach vorne, damit zwischen dem Sitzteil und der Rückenlehne eine kritische Spaltbildung vermieden werden kann. Entsprechend wandert das obere Rückenlehnenende vertikal nach unten.

Insofern ist nach einer vorteilhaften Ausführungsvariante vorgesehen, dass die Rückenlehne gegenüber dem Gestell, insbesondere gegenüber der Kopfstützenaufhängung, neigbar angeordnet ist.

Eine besonders bevorzugte Ausführungsvariante sieht vor, dass der rückenlehnenseitige Aufhängungsteil in einem Überlappungsbereich endet, in welchem die Kopfstütze gegenüber einem oberen Rückenlehnenende zumindest teilweise überlappend vor oder hinter der Rückenlehne anordenbar ist.

Im Sinne der Erfindung ist der "Überlappungsbereich" durch ein Gebiet der Rückenlehne beschrieben bzw. gekennzeichnet, welches von der Kopfstütze überdeckt werden kann.

Dabei spielt es keine Rolle, ob die Kopfstütze hierbei vor oder hinter die Rückenlehne geschoben wird.

Idealerweise ist der Überlappungsbereich so gewählt, dass zwischen der Rückenlehne und der Kopfstütze kein oder ein nur vernachlässigbar geringer Spalt entsteht, wenn der Neigungswinkel der Rückenlehne verändert wird.

Dadurch, dass der rückenlehnenseitige Aufhängungsteil gegenüber der Rückenlehne lose hängend angeordnet ist, kann die Rückenlehne, insbesondere gegenüber dem Gestell des Fahrzeugsitzes, verlagert werden, ohne hierbei die Position der Kopfstütze zu verändern.

Besonders vorteilhaft ist es, wenn der rückenlehnenseitige Aufhängungsteil lose, vorzugsweise federnd vorgespannt, an der Rückenlehne anliegend angeordnet ist.

Bei einem losen Anliegen des rückenlehnenseitigen Aufhängungsteils an der Rückenlehne kann diese ohne weiteres an der Kopfstütze vorbei bewegt werden.

Liegt das rückenlehnenseitige Aufhängungsteil kumulativ noch federnd vorgespannt an der Rückenlehne an, können die Kopfstütze und die Rückenlehne stets eng miteinander in Kontakt stehen.

Um die Reibung zwischen der Rückenlehne und der Kopfstütze vorteilhaft reduzieren zu können, ist es gut, wenn der rückenlehnenseitige Aufhängungsteil eine Gleiteinrichtung für ein Rückenlehnenpolster der Rückenlehne aufweist.

Eine baulich einfache Positionierung der Kopfstütze an der Rückenlehne kann vorliegend erzielt werden, wenn der gestellseitige Aufhängungsteil und der rückenlehnenseitige Aufhängungsteil gegenüber liegend angeordnet sind, und insbesondere ein gemeinsames bogenförmiges Verbindungsteil umfassen.

Wenn der gestellseitige Aufhängungsteil und der rückenlehnenseitige Aufhängungsteil gegenüber liegend angeordnet sind, kann die Kopfstützenaufhängung mit einer geringen Bauhöhe realisiert werden.

Sind der gestellseitige Aufhängungsteil und der rückenlehnenseitige Aufhängungsteil etwa mittels eines bogenförmig gestalteten Verbindungsteils miteinander verbunden, kann die Kopfstützenaufhängung insgesamt einfach als u-förmig gestaltetes Bauteil hergestellt sein.

Vorzugsweise ist die U-Form der Kopfstützenaufhängung nach unten offen ausgebildet, so dass das rückenlehnenseitige Aufhängungsteil radial beabstandet von dem gestellseitigen Aufhängungsteil unkompliziert mit der Rückenlehne überlappen kann.

In einem durch die U-Form gebildeten Zwischenraum kann vorteilhafter Weise das obere Rückenlehnenende angeordnet sein, wenn der rückenlehnenseitige Aufhängungsteil mit der Rückenlehne überlappt.

Insofern sieht eine besonders bevorzugte Ausführungsvariante vor, dass die Kopfstützenaufhängung und/oder die Kopfstütze eine Umhüllende bilden, in deren Volumen die Rückenlehne zumindest teilweise anordenbar ist.

Weist die Kopfstützenaufhängung einen bogenförmigen Grundkörper auf, der insbesondere jeweils links und rechts eines Kopfstützenpolsters einen Rohrbogen umfasst, kann die Kopfstütze baulich besonders einfach umgesetzt werden.

Um das Kopfpolster der Kopfstütze weit genug in den Sitzbereich des Fahrzeugsitzes und damit nahe an den Kopf eines in dem Fahrzeugsitz Platz genommenen Fahrgastes heran positionieren zu können, ist es besonders vorteilhaft, wenn der rückenlehnenseitige Aufhängungsteil bauchig ausgestaltet ist.

Der Bauch des rückenlehnenseitigen Aufhängungsteils ragt hierbei vorteilhaft in den Sitzbereich des Fahrzeugsitzes hinein.

An dieser Stelle sei der Vollständigkeit halber noch erwähnt, dass es vorteilhaft ist, wenn die Rückenlehne gegenüber der Kopfstütze frei bewegbar angeordnet ist. Hierdurch kann insbesondere eine Verstellung der Rückenlehne vorgenommen werden, ohne dass die Position der Kopfstütze verändert wird.

Sollte speziell eine zusätzliche Höheneinstellung auch hinsichtlich der Kopfstütze erforderlich sein, ist es vorteilhaft, wenn die Kopfstützenaufhängung eine Höhenverstelleinrichtung umfasst.

Diese Höhenverstelleinrichtung kann in an sich bekannter Weise ausgestaltet sein.

Hierbei ist es beispielsweise möglich, dass die gesamte Kopfstützenaufhängung in der Höhe verstellt wird.

Es kann aber auch lediglich ein Kopfpolsterrahmen mittels einer geeigneten Mechanik gegenüber der Kopfstützenaufhängung höhenverstellt werden.

Weitere Vorteile, Ziele und Eigenschaften vorliegender Erfindung werden anhand anliegender Zeichnung und nachfolgender Beschreibung erläutert, in welchen beispielhaft Fahrzeugsitze mit einer erfindungsgemäßen Kopfstützenaufhängung dargestellt und beschrieben sind.

In der Zeichnung zeigen:
- Fig. 1: schematisch eine perspektivische Ansicht eines Fahrzeugsitzes mit einem Überlappungsbereich zwischen einer Kopfstütze und einer Rücklehne, wobei ein rückenlehnenseitiges Aufhängungsteil der Kopfstütze vor der Rückenlehne angeordnet ist;
- Fig. 2: schematisch eine perspektivische Ansicht eines weiteren Fahrzeugsitzes mit einem Überlappungsbereich zwischen einer Kopfstütze und einer Rücklehne, wobei ein rückenlehnenseitiges Aufhängungsteil der Kopfstütze hinter der Rückenlehne angeordnet ist;
- Fig. 3: schematisch eine perspektivische Ansicht eines alternativen Fahrzeugsitzes, bei welchem ein rückenlehnenseitiges Aufhängungsteil der Kopfstütze ebenfalls hinter der Rückenlehne angeordnet ist; und
- Fig. 4: schematisch einen Ausschnitt eines alternativen Fahrzeugsitzes von der Rückseite, worin die Befestigung einer Kopfstütze gezeigt wird.

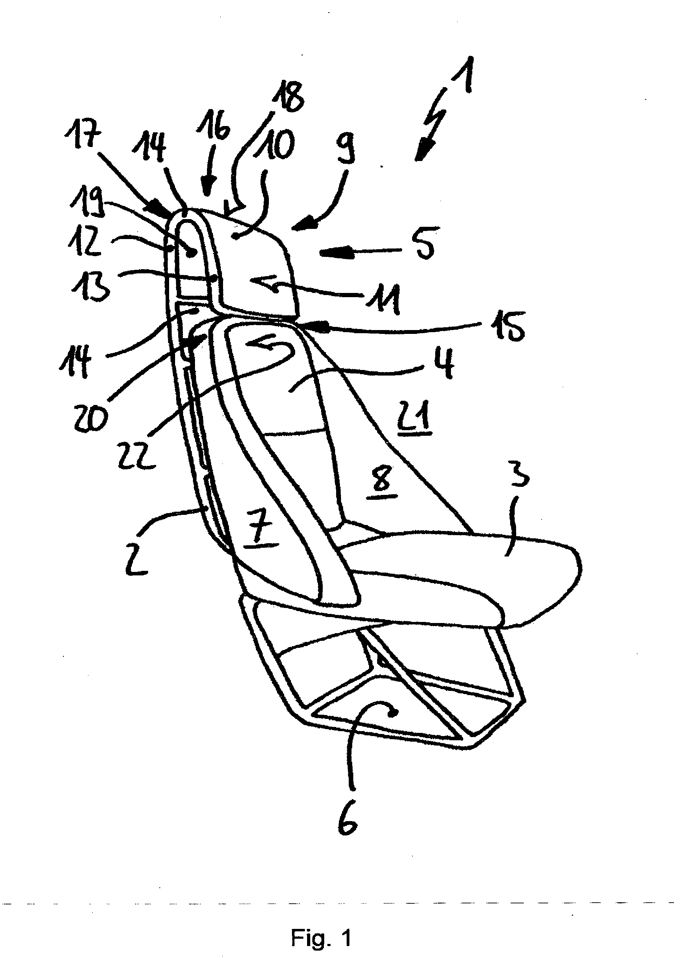

Der in der Figur 1 gezeigte Fahrzeugsitz 1 weist im Wesentlichen ein starres Gestell 2, ein Sitzteil 3, eine Rückenlehne 4 und eine Kopfstütze 5 auf.

Mit dem Gestell 2 ist der Fahrzeugsitz 1 an einem Boden 6 einer hier nicht weiter gezeigten Fahrgastzelle eines Kraftfahrzeugs, insbesondere eines Nutzkraftfahrzeugs, befestigt.

Seitlich der Rückenlehne 4 und auch des Sitzteils 3 sind Seitenwangen 7 und 8 zur verbesserten Seitenführung eines Fahrgastes vorhanden.

Die Rückenlehne 4 kann mittels eines hier nicht gezeigten Mechanismus gegenüber dem Gestell geneigt werden. Insbesondere dann, wenn das Sitzteil 3 vorgezogen wird.

Das Gestell 2 erstreckt sich vom Boden 6 bis hinauf zur Kopfstütze 5.

Die Kopfstütze 5 besteht im Wesentlichen aus einer Kopfstützenaufhängung 9 und einer Kopfstützenpolstereinrichtung 10.

Die Kopfstützenpolstereinrichtung 10 wiederum umfasst einen Kopfstützenpolsterrahmen (hier nicht gezeigt) und ein Kopfstützenpolster 11, welches von dem Kopfstützenpolsterrahmen getragen bzw. aufgespannt ist.

Die Kopfstützenaufhängung 9 ist in einem gestellseitigen Aufhängungsteil 12 und in einem rückenlehnenseitigen Aufhängungsteil 13 unterteilt, die mittels eines gemeinsamen bogenförmigen Verbindungsteils 14 ineinander fließend übergehen. Hierbei liegen sich der gestellseitige Aufhängungsteil 12 und der rückenlehnenseitige Aufhängungsteil 13 direkt gegenüber.

Insofern ist die Kopfstützenaufhängung 9 als ein nach unten geöffnetes Bauteil u-förmig ausgestaltet, so dass sich zwischen dem gestellseitigen Aufhängungsteil 12 und dem rückenlehnenseitigen Aufhängungsteil 13 ein Zwischenraum 14 zum Aufnehmen eines oberen Rückenlehnenendes 15 der Rückenlehne 4 ergibt.

Das nach unten geöffnete, u-förmige Bauteil realisiert somit einen bogenförmigen Grundkörper 16 der Kopfstützenaufhängung 9, der in diesem Ausführungsbeispiel jeweils links und rechts des Kopfstützenpolsters 11 einen Rohrbogen 17 (hier nur exemplarisch beziffert) umfasst.

Insgesamt bildet die Kopfstütze 5 und insbesondere auch die Kopfstützenaufhängung 9 eine Umhüllende 18 mit einem Volumen 19 aus, in welchem zumindest das obere Rückenlehnenende 15 teilweise anordenbar ist.

Somit wird an dem Fahrzeugsitz 1 ein Überlappungsbereich 20 geschaffen, in welchem die Kopfstütze 5 gegenüber dem oberen Rückenlehnenende 15 zumindest teilweise überlappend vor der Rückenlehne 4 anordenbar ist.

In diesem Ausführungsbeispiel ist die Kopfstützenaufhängung 9 als Verlängerung direkt von dem Gestell 2 ausgestaltet, so dass die Kopfstützenaufhängung 9 baulich einfach an dem Fahrzeugsitz 1 realisiert ist.

Hierbei endet das Gestell 2 mit dem rückenlehnenseitigen Aufhängungsteil 13 im Bereich des oberen Rückenlehnenendes 15 außerhalb der Rückenlehne 4.

Vorteilhafter Weise ist der rückenlehnenseitige Aufhängungsteil 13 gegenüber der Rückenlehne 4 lose hängend angeordnet.

Insofern kann sich die Rückenlehne 4 gegenüber der Kopfstütze 5 frei bewegen, ohne dass sich die Lage der Kopfstütze 5 verändert, wenn beispielsweise ein Neigungswinkel der Rückenlehne 4 geändert wird.

Damit die Kopfstütze 5 bzw. das Kopfstützenpolster 11 ausreichend weit in einem Sitzbereich 21 des Fahrzeugsitzes 1 hineinragt, um etwa einen Kopf ergonomisch gut stützen zu können, ist der rückenlehnenseitige Aufhängungsteil 13 bauchig ausgestaltet.

Zudem liegt der rückenlehnenseitige Aufhängungsteil 13 durch die u-förmige Gestalt der Kopfstützenaufhängung 9 vorgespannt an einem Rückenlehnenpolster 22 der Rückenlehne 4 an, wodurch eine direkte Nähe der Kopfstütze 5 zu der Rückenlehne 4 hergestellt werden kann.

Damit das Rückenlehnenpolster 22 durch den direkten Kontakt mit dem rückenlehnenseitigen Aufhängungsteil 13 insbesondere mechanisch möglichst wenig beansprucht wird, weist der rückenlehnenseitige Aufhängungsteil 13 eine dem Rückenlehnenpolster 22 zugewandte Gleiteirichtung (hier nicht sichtbar und beziffert) auf.

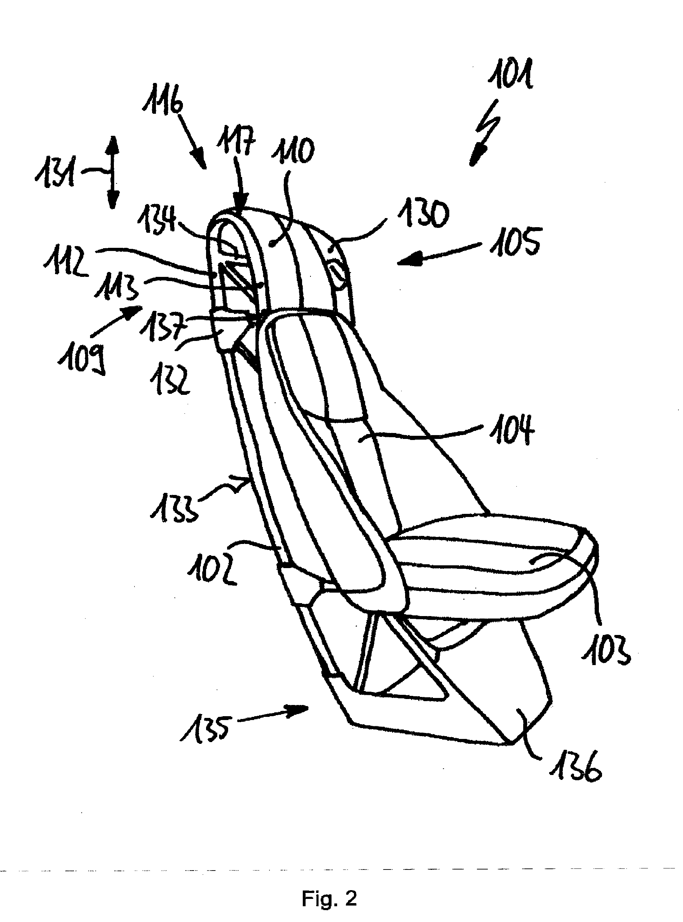

Der in der Figur 2 gezeigte Fahrzeugsitz 101 zeichnet sich im Wesentlichen ebenfalls durch ein starres Gestell 102, ein Sitzteil 103, eine Rückenlehne 104 und eine Kopfstütze 105 aus. Aufgrund der konstruktiven Nähe zu dem Fahrzeugsitz 1 der Figur 1 werden nachfolgend nur die wesentlichen Unterschiede beschrieben, um so auch Wiederholungen zu vermeiden.

Die Kopfstütze 105 besteht auch in diesem weiteren Ausführungsbeispiel im Wesentlichen aus einer Kopfstützenaufhängung 109 und einer Kopfstützenpolstereinrichtung 110.

Links neben der Kopfstütze 105 ist eine Einstelleinrichtung 130 angeordnet, mittels welcher bei Bedarf beispielsweise auch eine Höheneinstellung 131 speziell der Kopfstützenpolstereinrichtung 110 vorgenommen werden kann.

Im Gegensatz zu der Ausführung gemäß der Figur 1 ist die Kopfstützenaufhängung 109 als eigenständiges u-förmiges Bauteil mit einem bogenförmigen Grundkörper 116 umfassend einen gestellseitigen Aufhängungsteil 112 und einen rückenlehnenseitigen Aufhängungsteil 113 ausgestaltet, wobei sich der rückenlehnenseitige Aufhängungsteil 113 lose hängend bis hinter die Rückenlehne 104 erstreckt. Insofern ist der rückenlehnenseitige Aufhängungsteil 113 außerhalb der Rückenlehne 104 angeordnet.

Der gestellseitige Aufhängungsteil 112 ist über eine Haltemuffe 132 mit dem übrigen Gestell 102 des Fahrzeugsitzes 101 verbunden und er kann zusätzlich mit einer Rohrstruktur 133 des Gestells 102 verschweißt sein.

Zur Stabilisierung der eigenständigen Kopfstützenaufhängung 109 sind zwischen links und rechts der Kopfstützenpolstereinrichtung 110 angeordneten Rohrbögen 117 zusätzliche Querverstrebungen 134 vorgesehen, so dass die Kopfstütze 105 insgesamt sehr robust baut.

Im unteren Bereich 135 des Fahrzeugsitzes 101 ist das Gestell 102 noch durch eine Verkleidung 136 abgedeckt.

Insofern sind die wesentlichen Unterscheide zu dem ersten Ausführungsbeispiel gemäß der Figur 1 darin zu sehen, dass die Kopfstützenaufhängung 109 für sich ein eigenes Bauteil darstellt, durch welches das Gestell 102 oberseitig ergänzt ist, und dass der rückenlehnenseitige Aufhängungsteil 113 zumindest mit seinem Endbereich 137 hinter der Rückenlehne 104 platziert ist, wenn die Kopfstütze 105 ordnungsgemäß montiert ist.

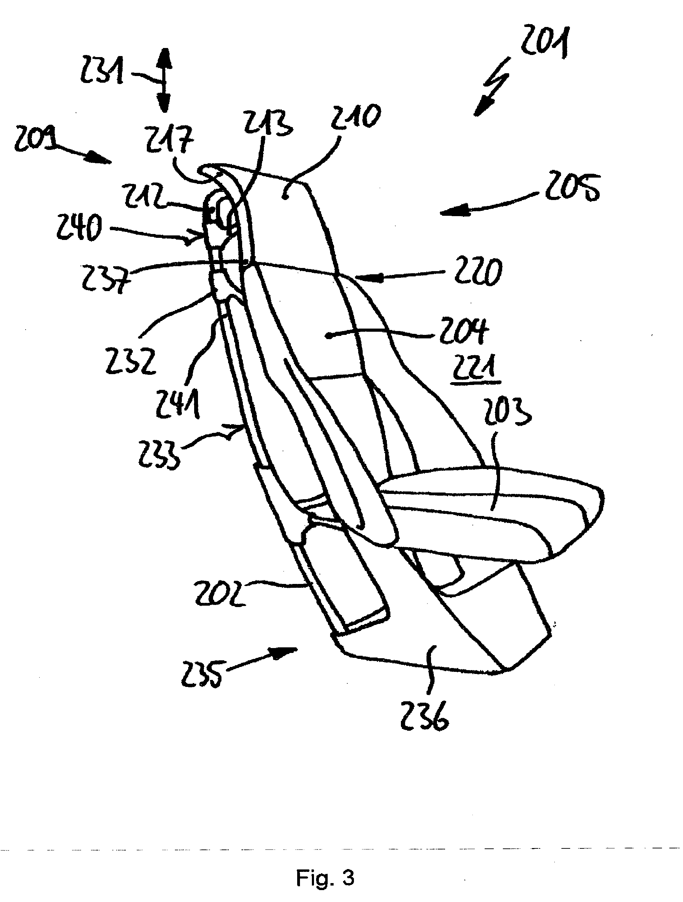

Bei dem in der Figur 3 gezeigten alternativen Fahrzeugsitz 201 ist ein rückenlehnenseitiger Aufhängungsteil 213 einer Kopfstützenaufhängung 209 einer Kopfstütze 205 insbesondere mit seinem Endbereich 237 ebenfalls hinter und damit außerhalb einer Rückenlehne 204 des Fahrzeugsitzes 201 platziert. Somit ergibt sich auch hier ein Überlappungsbereich 220, der jedoch wie in dem Ausführungsbeispiel gemäß der Figur 2 nicht vor sondern hinter der Rückenlehne 204 angesiedelt ist.

Der rückenlehnenseitige Aufhängungsteil 213 umfasst jeweils links und rechts der Kopfstütze 205 einen Rohrbogen 217 (hier nur exemplarisch gezeigt), wodurch eine bis in einen Sitzbereich 221 hinein gekrümmte Kopfstützenpolstereinrichtung 210 der Kopfstütze 205 bereitgestellt werden kann.

Hierbei ist der rückenlehnenseitige Aufhängungsteil 213 mittels einer an einem gestellseitigen Aufhängungsteil 212 der Kopfstützenaufhängung 209 rastfähigen Schiebemuffe 240 höhenverstellbar an eben diesem gestellseitigen Aufhängungsteil 212 befestigt, wodurch insbesondere die Kopfstützenpolstereinrichtung 210 gegenüber einem Sitzteil 203 des Fahrzeugsitzes 201 höhenverstellt werden kann.

Somit geht der gestellseitige Aufhängungsteil 212 in den rückenlehnenseitigen Aufhängungsteil 213 nicht einstückig über, wie dies bei den zuvor beschriebenen Ausführungsbeispielen noch der Fall ist.

Vielmehr erstreckt sich der gestellseitige Aufhängungsteil 212 hierbei quer zwischen zwei Vertikalrohren 241 (hier nur exemplarisch beziffert) des Gestells 202.

Beispielsweise kann eine ausreichende Rasterung für eine einfache Höheneinstellung 231 mittels hier nicht weiter gezeigten Einkerbungen an dem gestellseitigen Aufhängungsteil 212 erzielt werden.

Insofern ist die Kopfstützenaufhängung 209 im Gegensatz zu den zuvor beispielhaft beschriebenen nunmehr mehrteilig, insbesondere zweiteilig, mit einem separaten gestellseitigen Aufhängungsteil 212 und einem separaten rückenlehnenseitigen Aufhängungsteil 213, verwirklicht.

Der gestellseitige Aufhängungsteil 212 ist mittels einer Haltemuffe 232 an einer Rohrstruktur 233 eines Gestells 202 des Fahrzeugsitzes 201 angeordnet, so dass die Kopfstütze 205 von dem Gestell 202 abgenommen werden kann.

Im unteren Bereich 235 des Fahrzeugsitzes 201 ist auch in diesem Ausführungsbeispiel noch eine Verkleidung 236 für das Gestell 202 vorgesehen.

Es versteht sich, dass es sich bei den vorstehend erläuterten Ausführungsbeispielen lediglich um erste Ausgestaltungen von erfindungsgemäßen Fahrzeugsitzen handelt. Insofern beschränkt sich die Ausgestaltung der Erfindung nicht auf diese Ausführungsbeispiele.

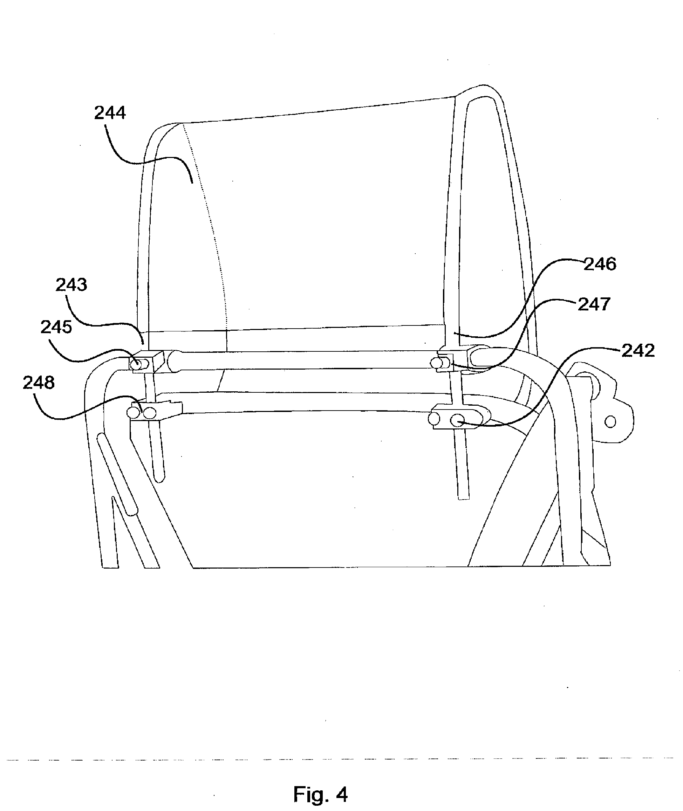

In Fig. 4 wird ein alternativer Fahrzeugsitz in einem Ausschnitt dargestellt. Dieser von schräg hinten dargestellte Fahrzeugsitz weist eine Kopfstütze 244, die zwei gebogene Rohrelemente 243 und 246 umfasst, wobei auf den Rohrelementen ein Strickgewirke zur Bildung einer Fläche gezogen ist. Die Rohrelemente 243 und 246 greifen in zwei an einem Rückenlehnenrahmen befestigte Fassungen 245 und 247 ein und können zusätzlich innerhalb Kunststoffgleitelementen 242 und 248angeordnet sein. Diese Kunststoffgleitelemente 242 und 248 bewirken eine Widerstandsbeaufschlagung der beiden Rohrelemente 243 und 246 bei einem Nachoben- oder Nachuntenverschieben der beiden Rohrelemente 243 und 246. Hierdurch ist ein leichtes Verstellen der Kopfstütze in Höhenrichtung relativ zu dem Rückenlehenrahmen möglich.

### Bezugszeichenliste

- 1: Fahrzeugsitz
- 2: Gestell
- 3: Sitzteil
- 4: Rückenlehne
- 5: Kopfstütze
- 6: Boden
- 7: rechte Seitenwange
- 8: linke Seitenwange
- 9: Kopfstützenaufhängung
- 10: Kopfstützenpolstereinrichtung
- 11: Kopfstützenpolster
- 12: gestellseitiger Aufhängungsteil
- 13: rückenlehnenseitiger Aufhängungsteil
- 14: Zwischenraum
- 15: oberes Rückenlehnenende
- 16: Grundkörper
- 17: rechter Rohrbogen
- 18: Umhüllende
- 19: Volumen
- 20: Überlappungsbereich
- 21: Sitzbereich
- 22: Rückenlehnenpolster
- 101: Fahrzeugsitz
- 102: Gestell
- 103: Sitzteil
- 104: Rückenlehne
- 105: Kopfstütze
- 109: Kopfstützenaufhängung
- 110: Kopfstützenpolstereinrichtung
- 112: gestellseitiger Aufhängungsteil
- 113: rückenlehnenseitiger Aufhängungsteil
- 116: Grundkörper
- 117: rechter Rohrbogen
- 130: Einstelleinrichtung
- 131: Höheneinstellung
- 132: Haltemuffe
- 133: Rohrstruktur
- 134: Querverstrebungen
- 135: unterer Bereich
- 136: Verkleidung
- 137: Endbereich
- 201: Fahrzeugsitz
- 202: Gestell
- 203: Sitzteil
- 204: Rückenlehne
- 205: Kopfstütze
- 209: Kopfstützenaufhängung
- 210: Kopfstützenpolstereinrichtung
- 212: gestellseitiger Aufhängungsteil
- 213: rückenlehnenseitiger Aufhängungsteil
- 217: rechter Rohrbogen
- 220: Überlappungsbereich
- 221: Sitzbereich
- 231: Höheneinstellung
- 232: Haltemuffe
- 233: Rohrstruktur
- 235: unterer Bereich
- 236: Verkleidung
- 237: Endbereich
- 240: Schiebemuffe
- 241: Vertikalrohre
- 242: Kunststoffgleitelement
- 243: Rohrelemente
- 244: Koptstütze
- 245: Fassung
- 246: Rohrelemente
- 247: Fassung
- 248: Kunststoffgleitelement

## Patentansprüche

1. Fahrzeugsitz (1) mit einem Gestell (2) zum Befestigen des Fahrzeugsitzes (1) an einer Fahrzeugkarosserie (6), mit einem Sitzteil (3), mit einer Rückenlehne (4) und mit einer Kopfstütze (5) umfassend eine Kopfstützenaufhängung (9), bei welchem das Sitzteil (3) und die Rückenlehne (4) an dem Gestell (2) angeordnet sind, so dass das Gestell (2) eine Art starres Tragegestell für Fahrzeugsitzkomponenten darstellt, wobei
die Kopfstützenaufhängung (9) von dem Gestell (2) ausgestaltet oder an dem Gestell (2) befestigt ist, und die Kopfstützenaufhängung (9) einen gestellseitigen Aufhängungsteil (12) und einen rückenlehnenseitigen Aufhängungsteil (13) aufweist, wobei der rückenlehnenseitige Aufhängungsteil (13) außerhalb der Rückenlehne (4) und gegenüber dieser lose hängend angeordnet ist.

2. Fahrzeugsitz (1) nach Anspruch 1,
**dadurch gekennzeichnet, dass**
der rückenlehnenseitige Aufhängungsteil (13) in einem Überlappungsbereich (20) endet, in welchem die Kopfstütze (5) gegenüber einem oberen Rückenlehnenende (15) zumindest teilweise überlappend vor oder hinter der Rückenlehne (4) anordenbar ist.

3. Fahrzeugsitz (1) nach einem der Ansprüche 1 bis 2,
**dadurch gekennzeichnet, dass**
der rückenlehnenseitige Aufhängungsteil (13) lose, vorzugsweise federnd vorgespannt, an der Rückenlehne (4) anliegend angeordnet ist.

4. Fahrzeugsitz (1) nach einem der Ansprüche 1 bis 3,
**dadurch gekennzeichnet, dass**
der rückenlehnenseitige Aufhängungsteil (13) eine Gleiteinrichtung für ein Rückenlehnenpolster (22) der Rückenlehne (4) aufweist.

5. Fahrzeugsitz (1) nach einem der Ansprüche 1 bis 4,
**dadurch gekennzeichnet, dass**
die Kopfstützenaufhängung (9) und/oder die Kopfstütze (5) eine Umhüllende (18) bilden, in deren Volumen (19) die Rückenlehne (4) zumindest teilweise anordenbar ist.

6. Fahrzeugsitz (1) nach einem der Ansprüche 1 bis 5,
**dadurch gekennzeichnet, dass**
der gestellseitige Aufhängungsteil (12) und der rückenlehnenseitige Aufhängungsteil (13) gegenüber liegend angeordnet sind, und insbesondere ein gemeinsames bogenförmiges Verbindungsteil (14) umfassen.

7. Fahrzeugsitz (1) nach einem der Ansprüche 1 bis 6,
**dadurch gekennzeichnet, dass**
die Kopfstützenaufhängung (9) einen bogenförmigen Grundkörper (16) aufweist, der insbesondere jeweils links und rechts eines Kopfstützenpolsters (11) einen Rohrbogen (17) umfasst.

8. Fahrzeugsitz (1) nach einem der Ansprüche 1 bis 7,
**dadurch gekennzeichnet, dass**
der rückenlehnenseitige Aufhängungsteil (13) bauchig ausgestaltet ist.

9. Fahrzeugsitz (1) nach einem der Ansprüche 1 bis 8,
**dadurch gekennzeichnet, dass**
die Rückenlehne (4) gegenüber dem Gestell (2), insbesondere gegenüber der Kopfstützenaufhängung (9), neigbar angeordnet ist.

## Claims

1. Vehicle seat (1) with a framework (2) for fastening the vehicle seat (1) to a vehicle body (6), a seat part (3), a backrest (4) and a headrest (5) which comprises a headrest suspension (9), in which the seat part (3) and the backrest (4) are arranged on the framework (2) such that the framework (2) forms a type of rigid support framework for vehicle seat components, wherein the headrest suspension (9) is formed by the framework (2) or is fastened to the framework (2), and the headrest suspension (9) has a suspension part (12) on the framework side and a suspension part (13) on the backrest side, wherein the suspension part (13) on the backrest side is arranged outside the backrest (4) and it is loosely suspended with respect thereto.

2. Vehicle seat (1) according to claim 1, **characterised in that** the suspension part (13) on the backrest side terminates in an overlap region (20) in which the headrest (5) can be arranged such that it at least partially overlaps the front or back of the backrest (4) with respect to an upper end (15) of the backrest.

3. Vehicle seat (1) according to either claim 1 or claim 2, **characterised in that** the suspension part (13) on the backrest side is loosely arranged, preferably resiliently pretensioned, such that it abuts the backrest (4).

4. Vehicle seat (1) according to any of claims 1 to 3, **characterised in that** the suspension part (13) on the backrest side has a sliding device for a backrest padding (22) of the backrest (4).

5. Vehicle seat (1) according to any of claims 1 to 4, **characterised in that** the headrest suspension (9) and/or the headrest (5) form an envelope (18), in the volume of which (19) the backrest (4) can be arranged at least in part.

6. Vehicle seat (1) according to any of claims 1 to 5, **characterised in that** the suspension part (12) on the framework side and the suspension part (13) on the backrest side are arranged opposite one another and, in particular, comprise a common arcuate connecting part (14).

7. Vehicle seat (1) according to any of claims 1 to 6, **characterised in that** the headrest suspension (9) has an arcuate main body (16) which has a pipe bend (17) in particular to both the left and right of a headrest padding (11).

8. Vehicle seat (1) according to any of claims 1 to 7, **characterised in that** the suspension part (13) on the backrest side is bulge-shaped.

9. Vehicle seat (1) according to any of claims 1 to 8, **characterised in that** the backrest (4) is arranged such that it can be inclined with respect to the framework (2), in particular with respect to the headrest suspension (9).

## Revendications

1. Siège de véhicule (1) avec un bâti (2) permettant de fixer le siège de véhicule (1) à une carrosserie de véhicule (6), avec une partie d'assise (3), avec un dossier (4) et avec un appuie-tête (5) comprenant une suspension d'appuie-tête (9), dans lequel la partie d'assise (3) et le dossier (4) sont agencés sur le bâti (2) de telle sorte que le bâti (2) forme une sorte de bâti de support rigide pour les composants du siège de véhicule,
la suspension d'appuie-tête (9) étant réalisée par le bâti (2) ou fixée sur le bâti (2) et la suspension d'appuie-tête (9) présentant une partie de suspension du côté du bâti (12) et une partie de suspension du côté du dossier (13), la partie de suspension du côté du dossier (13) étant agencée en dehors du dossier (4) et de façon suspendue librement par rapport à celui-ci.

2. Siège de véhicule (1) selon la revendication 1,
**caractérisé**
**en ce que** la partie de suspension du côté du dossier (13) se termine dans une zone de chevauchement (20) dans laquelle l'appuie-tête (5) peut être agencé au moins partiellement en chevauchement par rapport à une extrémité supérieure du dossier (15) devant ou derrière le dossier (4).

3. Siège de véhicule (1) selon l'une des revendications 1 ou 2,
**caractérisé**
**en ce que** la partie de suspension du côté du dossier (13) est agencée de façon à prendre appui librement, de préférence en étant précontrainte par ressort, sur le dossier (4).

4. Siège de véhicule (1) selon l'une des revendications 1 à 3,
**caractérisé**
**en ce que** la partie de suspension du côté du dossier (13) présente un dispositif de coulissement pour un rembourrage de dossier (22) du dossier (4).

5. Siège de véhicule (1) selon l'une des revendications 1 à 4,
**caractérisé**
**en ce que** la suspension d'appuie-tête (9) et/ou l'appuie-tête (5) forment un enveloppement (18) dans le volume (19) de laquelle le dossier (4) peut être agencé au moins partiellement.

6. Siège de véhicule (1) selon l'une des revendications 1 à 5,
**caractérisé**
**en ce que** la partie de suspension du côté du bâti (12) et la partie de suspension du côté du dossier (13) sont agencées en opposition l'une par rapport à l'autre, et en particulier, comprennent une partie d'assemblage commune en forme d'arc (14).

7. Siège de véhicule (1) selon l'une des revendications 1 à 6,
**caractérisé**
**en ce que** la suspension d'appuie-tête (9) présente un corps de base en forme d'arc (16), qui comprend en particulier un tube coudé (17), respectivement, à gauche et à droite d'un rembourrage d'appuie-tête (11).

8. Siège de véhicule (1) selon l'une des revendications 1 à 7,
**caractérisé**
**en ce que** la partie de suspension du côté du dossier (13) est réalisée de façon bombée.

9. Siège de véhicule (1) selon l'une des revendications 1 à 8,
**caractérisé**
**en ce que** le dossier (4) est agencé de façon inclinable par rapport au bâti (2), en particulier par rapport à la suspension d'appuie-tête (9).
